# EUROPEAN PATENT APPLICATION

(11) **EP 2 983 231 A1**
(43) Date of publication of application: **10.02.2016**
(21) Application number: 14779867.2
(22) Date of filing: 26.03.2014
(51) Int. Cl.: H01M 4/58, H01M 4/36

(54) **COMPOSITE MATERIAL**

(30) Priority: 02.04.2013 JP 2013077255
(71) Applicant: Idemitsu Kosan Co., Ltd., Chiyoda-ku Tokyo 100-8321 (JP)
(72) Inventor: YANAGI, Kazuaki, Sodegaura-shi Chiba 299-0293 (JP); HIGUCHI, Hiroyuki, Sodegaura-shi Chiba 299-0293 (JP); KOSHIKA, Hiromichi, Tokyo 100-8321 (JP); KUROKAWA, Shinichi, Sodegaura-shi Chiba 299-0293 (JP)
(74) Representative: Clarke, Lionel Paul
(86) International application number: PCT/JP2014/001735
(87) International publication number: WO 2014/162693

(57) **Abstract**

A composite material including an alkali metal sulfide, a conductive aid having fine pores and a solid electrolyte, wherein the alkali metal sulfide, the conductive aid and the solid electrolyte are aggregated and the half width of a peak of the alkali metal sulfide measured by X-ray diffraction is 1.0° or more.

## Description

### Technical Field

The invention relates to a composite material that can be used as a positive electrode material of a lithium ion battery and a production method thereof.

### Background Art

With development of mobile communication devices and information electronic devices in recent years, there is an increasing demand for a high-capacity and lightweight lithium secondary battery. Almost all of electrolytes that show high lithium ion conductivity at room temperature are liquids, and many of commercially available lithium ion secondary batteries use an organic electrolyte liquid. A lithium secondary battery using this organic electrolyte liquid involves risks of leakage, ignition and/or explosion, and hence, a battery safer than ever has been desired. An all-solid battery using a solid electrolyte has characteristics that leakage and/or ignition of an electrolyte hardly occurs. However, practical use of a solid electrolyte is difficult under the present circumstances since the ion conductivity thereof is generally low.

As an all-solid lithium battery using a solid electrolyte, conventionally, lithium ion conductive ceramics based on Li₃N is known as a solid electrolyte showing a high ionic conductivity of 10⁻³S cm⁻¹ at room temperature. However, due to its low decomposition voltage, it cannot constitute a battery that operates at 3V or more.

As a sulfide-based solid electrolyte, Patent Document 1 discloses a solid electrolyte having an ionic conductivity of 10⁻⁴ Scm⁻¹ level. Patent Document 2 discloses an electrolyte that is synthesized by using Li₂S and P₂S₅ and has an ionic conductivity of 10⁻⁴ Scm⁻¹ level. Patent Document 3 discloses sulfide-based crystallized glass that is synthesized by using Li₂S and P₂S₅ at an amount ratio of 68 to 74 mol% : 26 to 32 mol% and realizes an ionic conductivity of 10⁻³ Scm⁻¹ level.

In the all-solid lithium battery disclosed in Patent Document 2, since no lithium ions are contained in a positive electrode material, an active material containing a lithium ion is required to be used in a negative electrode active material. However, only few negative electrode materials contain a lithium ion, and hence, there is almost no choice in selecting a lithium ion-containing negative electrode active material.

It is possible to produce an all-solid lithium battery using the above-mentioned sulfide-based solid electrolyte. However, a positive electrode of a conventional all-solid lithium battery was produced by using an oxide-based positive electrode active material such as LCO and a sulfide-based solid electrolyte (Patent Document 4).

Due to its low theoretical capacity, it is impossible to obtain a high-capacity all-solid lithium battery by using LCO or the like. On the other hand, an all-solid lithium battery using sulfur or lithium sulfide, carbon and an inorganic solid electrolyte in a positive electrode is disclosed (Patent Documents 5 and 6). However, an all-solid lithium battery having a higher charge/discharge capacity per weight of sulfur has been demanded.

A technology is disclosed in which amorphous lithium sulfide having a high theoretical capacity and a conductive agent are mixed to prepare a positive electrode (Patent Document 7). However, a lithium ion battery using such a positive electrode has a defect that the charge/discharge capacity thereof is lowered when it operates at a high rate.

Further, Non-Patent Document 1 discloses a production method in which lithium triethylborohydride (LiEt3BH) is used. This production method has a disadvantage that mass synthesis is difficult.

### Related Art Documents

### Patent Documents

Patent Document 1: JP-A-H04-202024
Patent Document 2: JP-A-2002-109955
Patent Document 3: JP-A-2005-228570
Patent Document 4: JP-A-2008-226639
Patent Document 5: JP-A-2010-95390
Patent Document 6: WO2012/102037
Patent Document 7: JP-A-2006-32143

### Non-Patent Document

Non-Patent Document 1 "NEW METHODOLOGY FOR THE INTRODUCTION OF SULFUR INTO ORGANIC MOLECULES"

### Summary of the Invention

An object of the invention is to provide a composite material, when an all-solid battery uses which composite material in a positive electrode, the battery has a high charge/discharge capacity and can use a negative electrode material that contains no lithium ions in a negative electrode.

According to the invention, the following composite material or the like are provided.
1. A composite material comprising an alkali metal sulfide, a conductive aid having fine pores and a solid electrolyte, wherein the alkali metal sulfide, the conductive aid and the solid electrolyte are aggregated and the half width of a peak of the alkali metal sulfide measured by X-ray diffraction was 1.0° or more.
2. The composite material according to 1, wherein at least part of the alkali metal sulfide is dispersed within the fine pores of the conductive aid.
3. The composite material according to 1 or 2, wherein the alkali metal sulfide is lithium sulfide.
4. The composite material according to any one of 1 to 3, wherein the conductive aid is a carbon material.
5. The composite material according to any one of 1 to 4, wherein the conductive aid is activated carbon.
6. The composite material according to any one of 1 to 5, wherein the solid electrolyte is a sulfide-based solid electrolyte.
7. The composite material according to any one of 1 to 6, wherein the solid electrolyte is a sulfide-based solid electrolyte comprising Li, P and S.
8. The composite material according to any one of 1 to 7, wherein the solid electrolyte is a sulfide-based solid electrolyte comprising Li, P, S and I, a sulfide-based solid electrolyte comprising Li, P, S and Br or a sulfide-based solid electrolyte comprising Li, P, S and Cl.
9. The composite material according to any one of 1 to 8, wherein the solid electrolyte is obtained by using as raw materials at least Li₂S and P₂S₅ and the molar ratio of Li₂S and P₂S₅ used as the raw materials is Li₂S:P₂S₅=60:40 to 80:20.
10. The composite material according to any one of 1 to 9, wherein the primary particle diameter of the solid electrolyte is 0.1 µm or more and 100 µm or less.
11. An electrode that is obtained from the composite material according to any one of 1 to 10.
12. A lithium ion battery comprising the electrode according to 11 as a positive electrode layer.
13. A method for producing a composite material comprising:
   reacting with an alkali metal a composite material precursor that comprises sulfur, a conductive aid having fine pores and a solid electrolyte in which the sulfur, the conductive aid and the solid electrolyte are aggregated, and at least part of the sulfur is present within fine pores of the conductive aid.
14. The method for producing a composite material according to 13 that comprises the following steps (A) and (B):
   (A) a step of aggregating a sulfur-conductive aid composite that contains sulfur and a conductive aid having fine pores, in which the sulfur and the conductive aid are aggregated, and at least part of the sulfur is present within fine pores of the conductive aid, thereby to produce a composite material precursor; and
   (B) a step of reacting the composite material precursor with an alkali metal.
15. The method for producing the composite material according to 13 or 14 that comprises the following steps (A-1), (A-2) and (B):
   (A-1) a step of aggregating sulfur and a conductive aid having fine pores to produce a sulfur-conductive aid composite;
   (A-2) a step of aggregating the sulfur-conductive aid composite with a solid electrolyte, thereby to produce a composite material precursor; and
   (B) a step of reacting the composite material precursor with an alkali metal.
16. The method for producing a composite material according to any one of 13 to 15, wherein the alkali metal is a lithium metal.
17. The method for producing a composite material according to any one of 13 to 16, wherein the conductive aid is a carbon material.
18. The method for producing a composite material according to any one of 13 to 17, wherein the conductive aid is activated carbon.
19. The method for producing a composite material according to any one of 13 to 18, wherein the solid electrolyte is a sulfide-based solid electrolyte.
20. The method for producing a composite material according to any one of 13 to 19, wherein the solid electrolyte is a sulfide-based solid electrolyte comprising Li, P and S.
21. The method for producing a composite material according to any one of 13 to 20, wherein the solid electrolyte is obtained by using at least Li₂S and P₂S₅ as raw materials, and the molar ratio of Li₂S and P₂S₅ is Li₂S:P₂S₅=60:40 to 80:20.
22. The method for producing a composite material according to any one of 13 to 21, wherein the primary particle size of the solid electrolyte is 0.1 µm or more and 100 µm or less.
23. The method for producing a composite material according to any one of 13 to 22, wherein the composite material precursor and the alkali metal are reacted by simply mixing only the composite material precursor and the alkali metal.
24. The method for producing a composite material according to any one of 13 to 22, wherein the composite material precursor and the alkali metal are reacted by mixing in a planetary ball mill containing no balls.
25. The method for producing a composite electrolyte according to any one of 13 to 22, wherein the composite precursor and the alkali metal are reacted by reacting a formed product containing the composite material precursor and the alkali metal.
26. The method for producing a composite material according to any one of 13 to 22 and 25, wherein the formed product and the alkali metal are reacted by bonding the formed product and alkali metal foil by pressure.

According to the invention, it is possible to provide a composite material that enables an all-solid battery to have a high charge/discharge capacity and to use a negative electrode active material that does not contain a lithium ion in a negative electrode, by using the composite material in a positive electrode of the all-solid battery.

### Mode for Carrying out the Invention

The composite material of the invention comprises an alkali metal sulfide, a conductive aid having fine pores and a solid electrolyte, and the alkali metal sulfide, the conductive aid and the solid electrolyte are aggregated.

Further, the half width of the peak of the alkali metal sulfide measured by X-ray diffraction (XRD) is 1.0° or more.

The "aggregated" means that the alkali metal sulfide, the conductive aid having fine pores and the solid electrolyte are bonded with each other physically or chemically. This can be confirmed by observing the composition by means of XRD or by observing the element distribution by an electron microscope, or the like.

The composite material of the invention has a large half width of the peak of the alkali metal sulfide measured by XRD of 1.0° or more; that is the peak is broad. This means that the growth of the crystal structure is suppressed, that is, the size of crystals is small. A smaller crystal size means easiness in movement of Li ions, as well as excellent dispersiveness. As a result, the composite material of the invention is excellent in performance when used in a positive electrode of an all-solid electrode, in particular, excellent in charge/discharge capacity per unit weight of sulfur.

In the above-mentioned composite material, it is preferred that at least part of the alkali metal sulfide be present in a finely dispersed way within fine pores of the conductive aid. This can be confirmed by observing the crystal peak intensity by XRD or by observing element distribution by an electron microscope, or the like.

The half width of the peak of the alkali metal sulfide by XRD is preferably 1.3° or more, more preferably 1.6° or more. Normally, the peak half width is 10.0° or less.

The peak half width of the alkali metal sulfide is measured by the method described in the Examples. Among a plurality of peaks of the alkali metal sulfide, at least one peak may have a half width of 1.0° or more. As for the peak half width of the alkali metal sulfide, all peaks change similarly. For example, with an increase in dispersiveness of an alkali metal sulfide in the composite material, the half widths of all peaks tends to be large. It is preferred that a peak for which the half width is measured do not interfere with a peak derived from a phase other than the alkali metal sulfide or a peak having a stronger peak.

The alkali metal sulfide is not particularly restricted. As the alkali metal sulfide, lithium sulfide, sodium sulfide, potassium sulfide, rubidium sulfide, cesium sulfide, francium sulfide or the like can be given, for example. Lithium sulfide and sodium sulfide are preferable, with lithium sulfide being more preferable.

The above-mentioned composite material may contain an alkali metal in an amount larger than the theoretical mixture ratio of the alkali metal sulfide. In the case of Li₂S, for example, the molar ratio of Li:S is 2:1. However, it is possible to dope Li excessively in an amount ratio of 2.1:1 to 6:1, for example. The reason therefor is supposed to be fine dispersion of the Li metal in the above-mentioned composite material.

The conductive aid is not particularly restricted as long as it is an electron conductive material having a plurality of fine pores. A preferable conductive aid is a carbon material.

The BET specific surface area of the conductive aid is preferably 0.1 m²/g or more and 5000 m²/g or less, more preferably 1 m²/g or more and 4000 m²/g or less, and further preferably 1 m²/g or more and 3000 m²/g or less, with 10 m²/g or more and 3000 m²/g or less being most preferable.

If the BET specific surface area is less than 0.1 m²/g, the conductive aid may be difficult to be aggregated with the alkali metal sulfide. If the BET specific surface area exceeds 5000 m²/g, the conductive aid becomes bulky to make handling thereof difficult.

The fine pores of the conductive aid preferably have an average diameter of 1 nm or more and 40 nm or less, more preferably 1 nm or more and 20 nm or less. By allowing the size of the fine pores to be in this range, the charge/discharge capacity can be enhanced when the obtained composite material is used in an electrode.

The BET specific surface area and the average diameter of the fine pores can be measured by using a nitrogen adsorption isotherm that is obtained by putting the composite material under liquid nitrogen and allowing the nitrogen gas to be adsorbed to the composite material. Specifically, the BET surface area is obtained by the BET method and the average diameter of the fine pores is obtained by the BJH (Barrett-Joyner-Halenda) method.

The carbon material that satisfies the BET surface area and the fine pores mentioned above is not particularly restricted. However, carbon black such as ketjen black and acetylene black, mesoporus carbon, carbon nanotube, carbon nanohorn, fullerene, amorphous carbon, carbon fibers, natural graphite, synthetic graphite, activated carbon or the like can be given. Further, a composite material thereof can also be used.

The mesoporous carbon is a carbon material having fine pores extending two-dimensionally or three-dimensionally that is obtained by the production method described in the following documents: e.g. S.J. Sang, S.H. Joo, R.R yoo, et., J. Am. Chem. Soc., 122(2000)10712-10713, and T. Yokoi, Y. Sakamoto, O. Terasaki, et., J. Am. Chem. Soc., 128 (2006) 13664-13665

As the solid electrolyte, an inorganic-based solid electrolyte is preferable. As the inorganic-based solid electrolyte, an oxide-based solid electrolyte and a sulfide-based solid electrolyte can be given. Among these, a sulfide-based solid electrolyte is more preferable.

As the sulfide-based solid electrolyte, a sulfide-based solid electrolyte containing Li, P and S is preferable. As the sulfide-based solid electrolyte containing Li, P and S, a sulfide-based solid electrolyte obtained by using at least Li₂S as a raw material is preferable. As the sulfide-based solid electrolyte obtained by using Li₂S as a raw material, a sulfide-based solid electrolyte obtained by using Li₂S and another sulfide as a raw material is more preferable. As the sulfide-based solid electrolyte obtained by using Li₂S and another sulfide as a raw material, the sulfide-based solid electrolyte obtained by using these in a molar ratio of Li₂S:the other sulfide = 50:50 to 95:5 is particularly preferable.

As the sulfide-based solid electrolyte obtained by using Li₂S and another sulfide as the raw material, a sulfide-based solid electrolyte obtained by using at least Li₂S and P₂S₅ as the raw material is preferable.

As the sulfide-based solid electrolyte obtained by using at least Li₂S and P₂S₅ as the raw material, a sulfide-based solid electrolyte obtained by using these in a molar ratio of Li₂S:P₂S₅ = 60:40 to 82:18 is preferable, a sulfide-based solid electrolyte obtained by using these in a molar ratio of Li₂S:P₂S₅ = 60:40 to 80:20, and a sulfide-based solid electrolyte obtained by using these in a molar ratio of Li₂S:P₂S₅=65:35 to 78:22 is further preferable.

As the sulfide-based solid electrolyte obtained by using at least Li₂S and P₂S₅ as the raw material, a sulfide-based solid electrolyte obtained by using Li₂S and P₂S₅ as a raw material is preferable.

As the sulfide-based solid electrolyte obtained by using Li₂S and P₂S₅ as the raw material, a sulfide-based solid electrolyte obtained by using these in a molar ratio of Li₂S:P₂S₅ = 60:40 to 80:20 is preferable. A sulfide-based solid electrolyte obtained by using these in a molar ratio of Li₂S: P₂S₅ = 65:35 to 78:22 is more preferable. That is, when Li, P and S contained in a sulfide-based solid electrolyte is converted into a ratio of Li₂S and P₂S₅, a sulfide-based solid electrolyte in which the molar ratio of Li₂S and P₂S₅ becomes Li₂S:P₂S₅ = 60:40 to 80:20 is preferable, a sulfide-based solid electrolyte in which the molar ratio of Li₂S and P₂S₅ becomes Li₂S:P₂S₅ = 65:35 to 78:22 is further preferable.

For the solid electrolyte, in addition to Li₂S and P₂S₅, a halide may further be added. As the halide, LiI, LiBr, LiCl or the like can be given. As the solid electrolyte to the raw material of which a halide is added, a sulfide-based solid electrolyte containing Li, P, S and I, a sulfide-based solid electrolyte containing Li, P, S and Br and a sulfide-based solid electrolyte containing Li, P, S and Cl can be given.

The ratio of the molar amount of a halide relative to the total molar amount of Li₂S and P₂S₅ is preferably [Li₂S+P₂S₅]:halide = 50:50 to 99:1, more preferably [Li₂S+P₂S₅]:halide = 60:40 to 98:2, further preferably [Li₂S+P₂S₅]:halide =70:30 to 98:2, and particularly preferably [Li₂S+P₂S₅]:halide = 80:20 to 98:2.

As specific examples of the solid electrolyte, a sulfide-based solid electrode such as Li₂S-P₂S₅, LiI-Li₂S-P₂S₅, LiBr-Li₂S-P₂S₅ and Li₃PO₄-Li₂S-Si₂S, an oxide-based solid electrolyte such as Li₂O-B₂O₃-P₂O₅, Li₂O-SiO₂, Li₂O-P₂O₅ and Li₂O-B₂O₃-ZnO can be given.

The solid electrolyte may be in the glass state obtained by a production method such as a MM (mechanical milling) method, a melting method or the like or may be in the state of glass ceramics obtained by a heat treatment. As specific examples of the solid electrolyte in the glass ceramic state, a solid electrolyte having a Li₇P₃S₁₁ crystalline structure can be given. As other specific examples, a Li₃PS₄ crystalline structure, a Li₄P₂S₆ crystalline structure, a Li₇PS₆ crystalline structure, and a Li₄₋ₓGe₁₋ₓPₓS₄-based thiosilicone-based II crystalline structure (see Kanno et al, Journal of The Electrochemical Society, 148(7) A742-746(2001)) can be given.

The shape, size or the like of the solid electrolyte is not particularly restricted. However, one having a primary particle size of 0.1 µm or more and 100 µm or less is preferable, and one having a primary particle size of 0.1 µm or more and 20 µm or less is more preferable.

The method for producing a composite material of the invention comprises reacting a material in which sulfur, a conductive aid having fine pores and a solid electrolyte are aggregated and at least part of sulfur is present within fine pores (composite material precursor) with an alkali metal.

### (1) Reaction of a composite material precursor and an alkali metal

As the method for reacting the composite material precursor with the alkali metal, a method in which a composite material precursor and an alkali metal are simply mixed or a method in which a composite material precursor and an alkali metal are subjected to a discharge reaction using an external circuit. A method in which only a composite material precursor and an alkali metal are simply mixed is preferable, since an alkali metal exhibits a high reactivity. An alkali metal may be in the form of foil, flake, granules or powder.

Further, the composite material precursor may be reacted with an alkali metal as it is. Alternatively, a method may be taken in which the composite material precursor is once formed into a formed product, and the formed product is bonded by pressure to an alkali metal (specifically, alkali metal foil).

As the alkali metal, Li, Na, K, Rb or the like can be given, with Li being preferable. The alkali metal is used normally in an amount of 10 to 50 parts by weight relative to 100 parts by weight of a composite material precursor.

As the specific mixing method, a method in which a composite material precursor and an alkali metal are brought into contact and mixed in a mill containing no balls, such as a planetary ball mill (media-less ball mill), is preferable.

Use of a media-less ball mill is preferable since the state of sulfur when the sulfur-conductive aid composite mentioned later is produced (i.e. the state in which sulfur is finely dispersed in the fine pores of the conductive aid) can be kept until the final stage.

On the other hand, if mechanical milling is conducted in the final stage of production of the composite material as in Comparative Examples 1 and 2 (corresponding to Patent Document 6), there may be a case where the dispersed state of the alkali metal sulfide cannot be maintained. In this case, the peak half width of the alkali metal sulfide in the XRD measurement is about 0.6.

When the composite material precursor is bonded by pressure to the alkali metal foil, the pressure thereof is preferably 1 MPa or more and 1000 MPa or less, more preferably 5 MPa or more and 500 MPa or less, and further preferably 10 MPa or more and 60 MPa or less.

When bonding by pressure, the temperature is preferably 0°C or more and 200°C or less, more preferably 10°C or more and 180°C or less.

When alkali metal foil is bonded by pressure to the composite material precursor, the metal foil may be bonded to the precursor on the current collector side or the solid electrolyte side thereof. In the meantime, the amount of alkali metal foil remained on the formed product may preferably be small.

### (2) Method for producing composite material precursor

The composite material precursor can be produced by aggregating a material in which sulfur and a conductive aid having fine pores are aggregated and at least part of sulfur is present inside of fine pores of the conductive aid (sulfur-conductive aid composite) with a solid electrolyte.

As the method for aggregating a sulfur-conductive aid composite and a solid electrolyte, a method in which the sulfur-conductive aid composite and the solid electrolyte are aggregated by means of a planetary ball mill or the like can be given. As the solid electrolyte, the same as those mentioned above can be used.

### (3) Method for producing a sulfur-conductive aid composite

The sulfur-conductive aid composite can be produced by aggregating sulfur and a conductive aid having fine pores.

As the method for aggregating sulfur and a conductive aid, a method in which sulfur and a conductive aid are mixed in a planetary ball mill; a method in which sulfur and a conductive aid are subjected to a heat treatment at a temperature that is equal to or higher than the melting point of sulfur; a method in which sulfur is dissolved in a solvent under co-presence with a conductive aid, followed by drying; or the like can be given. A plurality of these methods can be combined.

Normally, sulfur is used in an amount of 10 to 80 parts by weight, a conductive aid is used in an amount of 10 to 50 parts by weight and a solid electrolyte is used an amount of 10 to 80 parts by weight relative to 100 parts by weight of the composite material precursor.

The composite material of the invention can be used as an electrode.

When used as an electrode, the composite material of the invention is subjected to press forming by a common method to form a sheet-like electrode, whereby an electrode can be produced.

Further, a method can be given in which a composite material or an electrode material containing a composite material is formed in the shape of a film on the current collector to prepare an electrode. As the film-forming method, the aerosol deposition method, the screen printing method, the cold spray method or the like can be given. Further, a method can be given in which a composite material or an electrode material containing a composite material is dispersed or partially dissolved in a solvent to prepare a slurry, and the slurry is then applied. According to need, a binder may be mixed.

As the above-mentioned current collector, a plate-like, foil-like, net-like collector or the like formed of stainless steel, gold, platinum, copper, zinc, nickel, tin, aluminum or an alloy of these can be used. When used as an electrode, the layer thickness may be appropriately selected according to battery design.

The above-mentioned electrode can be used as a positive electrode layer of a lithium ion battery. In this case, as other configurations of a lithium ion battery, those known in this technical field can be used, and a negative electrode layer that uses a negative electrode active material containing no lithium ions can be selected.

No specific restrictions are imposed on the negative electrode as long as it can be used in a normal electrode. It may be formed of a negative electrode mix that is obtained by mixing a negative electrode material and a solid electrolyte.

As the negative electrode active material, a commercially available active material can be used. For example, a carbon material, an Sn metal, an In metal, an Si metal, and alloys thereof can be used. Specifically, natural graphite, various graphite, powder of metals such as Si, Sn, Al, Sb, Zn and Bi, metal alloys such as SiAl, Sn₅Cu₆, Sn₂Co and Sn₂Fe, and in addition, amorphous alloys or plated alloys or the like can be given.

Also, Li alloys thereof can also be used. The particle size is not particularly restricted. One having an average particle size of several µm to 80 µm, for example, one having an average particle size of 1 µm to 80 µm or 2 µm to 70 µm can preferably be used.

No specific restrictions are imposed on the solid electrolyte, and a known solid electrolyte can be used. For example, an oxide-based solid electrolyte, a sulfide-based solid electrolyte and a polymer-based electrolyte are preferable. In respect of ionic conductivity, a sulfide-based solid electrolyte is more preferable. A sulfide-based solid electrolyte used in the above-mentioned composite material is preferable. The particle size thereof is not particularly restricted, but one having an average diameter of 0.1 µm to 100 µm; e.g. 0.5 µm to 80 µm or 1 µm to 60 µm; can preferably be used. Further, the average particle size can be measured by a measurement method described in the Examples.

The method for producing a lithium battery is not particularly restricted. For example, a method is known in which a sheet in which a positive electrode layer composed of an electrode comprising the composite material of the invention is formed on the positive electrode current collector, and a sheet that has been prepared in advance in which a negative electrode layer is formed on the negative electrode current collector is stacked, followed by pressing.

The above-mentioned solid electrolyte layer comprises a solid electrolyte. The solid electrolyte is not particularly restricted, and one used in the above-mentioned negative electrode mix can be used. The particle size is not particularly restricted, but one having an average particle size of 0.1 µm to 100 µm, e.g. 0.5 µm to 80 µm or 1 µm to 60 µm, can preferably be used. The average particle size can be measured by a method described in the Examples.

### EXAMPLES

### Production Example 1 [Production of solid electrolyte]

### (1) Production of lithium sulfide

Lithium sulfide was produced in accordance with the method according to a first embodiment (second step method) in JP-A-H07-330312. Specifically, in a 10 L-autoclave provided with a stirring blade, 3326.4g (33.6 mol) of N-methyl-2-pyrrolidone (NMP) and 287.4g (12 mol) of lithium hydroxide were placed, stirred at 300 rpm and heated to 130°C. After the heating, hydrogen sulfide was blown to the liquid at a supply speed of 3 l/min for 2 hours. Subsequently, this reaction liquid was heated under nitrogen flow (200 cc/min), and the reacted lithium hydrosulfide was hydrodesulfurized, thereby to obtain lithium sulfide. As the temperature increased, water produced as a side product by the reaction between the hydrogen sulfide and lithium hydroxidee started to evaporate. This water was condensed by a condenser and removed outside the system. When the water was distilled off outside the system, the temperature of the reaction liquid was increased. When the temperature reached 180°C, heating was stopped, and the temperature was maintained at a fixed temperature. After completion of the hydrodesulfurization reaction (after about 80 minutes), the reaction was completed to obtain lithium sulfide.

### (2) Purification of lithium sulfide

NMP in the 500 mL slurry reaction solution (NMP-lithium sulfide slurry) obtained above was removed by decantation, 100 mL of dehydrated NMP was added, and stirred at 105°C for about 1 hour. At that temperature, NMP was removed by decantation. Further, 100 mL of NMP was added, and stirred at 105°C for about 1 hour. At that temperature, NMP was removed by decantation. The similar operation was conducted four times in total. After completion of the decantation, under nitrogen flow and at a temperature of 230°C (a temperature that is equal to or higher than the boiling point of NMP), lithium sulfide was dried under normal pressure for 3 hours. The amount of impurities in the obtained lithium sulfide was measured.

The content of each sulfur oxide (lithium sulfide (Li₂SO₃), lithium sulfide (Li₂SO₄) and lithium thiosulfate (Li₂S₂O₃)) and the content of lithium N-methylaminolactate (LMAB) were quantitatively determined by an ion chromatography method. As a result, it was found that the total content of the sulfur oxides was 0.13 mass% and the content of LMAB was 0.07 mass%. The thus purified Li₂S was used in the following example.

### (3) Production of solid electrolyte

2.54g of purified Li₂S having an average particle size of about 30 µm produced above and 67.46g of P₂S₅ (manufactured by Sigma-Aldrich) having an average particle size of about 50 µm were placed in a 500 mL-alumina-made container that contained 175 alumina balls each having a diameter of 10 mm, and sealed. The measurement and sealing operation mentioned above were conducted in the globe box, and as for the equipment used, water had been removed in advance in a drier.

The sealed alumina container was subjected to a mechanical milling treatment at room temperature for 36 hours by means of a planetary ball mill (PM 400, manufactured by Verder Scientific Co.,), whereby white yellow solid electrolyte glass particles were obtained. The yield was 78%.

The resulting solid electrolyte glass particles were examined by an X-ray diffraction measurement (CuKα:λ = 1.5418Å). As a result, it was found that a peak derived from raw material Li₂S was not observed, and a hallow pattern derived from solid electrolyte glass was observed.

The obtained solid electrolyte glass particles were sealed in a SUS-made tube in an Ar atmosphere in a globe box, and were subjected to a heat treatment at 300°C for 2 hours, whereby electrolyte glass ceramics particles (average particle size: 14.52 µm) were obtained.

The average particle size was measured by means of a particle size distribution measuring device (Mastersizer 2000 (manufactured by Malvern)) in a measurement range of 0.02 µm to 2000 µm.

As for the resulting solid electrolyte glass ceramic particles, an X-ray diffraction measurement was conducted. A peak was observed at 2θ=17.8, 18.2, 19.8, 21.8, 23.8, 25.9, 29.5 and 30.0 deg. From these results, it can be understood that Li₇P₃S₁₁ crystals were formed in the resulting solid electrolyte glass ceramic particles.

The conductivity of this solid electrolyte glass ceramics was evaluated and found to be 1.3×10⁻³S/cm.

### Production Example 2 [Production of solid electrolyte]

3.34g of Li₂S having an average particle size of about 30 µm produced in the Production Example 1(2), 5.27g of P₂S₅ (manufactured by Sigma-Aldrich) having an average particle size of 50 µm and 1.40g of LiBr (manufactured by Sigma-Aldrich) were put in a 500 ml-alumina-made container containing 600g of alumina balls each having a diameter of 10 mm. The measurement and sealing operation mentioned above were conducted in the globe box, and as for the equipment used, water had been removed in advance in a drier.

This sealed alumina container was subjected to a mechanical milling treatment by means of a planetary ball mill (LP-4 manufactured by Ito Corporation) at room temperature for 20 hours, whereby white yellow solid electrolyte glass particles were obtained. The yield was 65%.

The above-mentioned solid electrolyte glass particles were sealed in a SUS-made tube in an Ar atmosphere in a globe box, and were subjected to a heat treatment at 220°C for 2 hours, whereby electrolyte glass ceramics particles were obtained. The conductivity of this solid electrolyte glass ceramics was evaluated and found to be 0.7×10⁻³S/cm.

### Production Example 3 [Production of sulfur-conductive aid composite]

35.0g of sulfur (manufactured by Sigma-Aldrich, purity: 99.998%) and 15.0g of MAXSORB MSC30 (hereafter appropriately referred to as "MSC30", manufactured by Kansai Coke & Chemicals Co., Ltd., BET specific surface area: 3000 m²/g) that is an activated carbon with a high specific surface area and having fine pores as a conductive aid were mixed by means of a planetary ball mill for 2 minutes. This mixture of sulfur and MSC30 was put in a stainless steel container, and was subjected to a heat treatment for 10 minutes at 60°C, 6 hours at 150°C and 2 hours and 45 minutes at 300°C. Then, the mixture was cooled to room temperature, and a sulfur-conductive aid composite was collected.

### Production Example 4 [Production of composite material precursor]

5.00g of the sulfur-conductive aid composite produced in Production Example 3, 5.00g of the solid electrolyte produced in Production Example 2 and 600g of alumina balls each having a diameter of 10 mm were put in a 500 ml-alumina-made container. The resultant was subjected to a mechanical milling treatment for 20 hours, whereby a composite of sulfur, the conductive aid and the solid electrolyte (composite material precursor) was obtained.

### Production Example 5 [Production of solid electrolyte]

3.90g of Li₂S having an average diameter of about 30 µm produced in Production Example 1(2) and 6.10g of P₂S₅ (manufactured by Sigma-Aldrich) having an average diameter of 50 µm were put in a 500 ml-alumina-made container containing 600g of alumina balls each having a diameter of 10 mm and sealed. The measurement and sealing operation mentioned above were conducted in the globe box, and as for the equipment used, water had been removed in advance in a drier.

This sealed alumina container was subjected to a mechanical milling treatment by means of a planetary ball mill (LP-4 manufactured by Ito Corporation) at room temperature for 20 hours, whereby white yellow solid electrolyte glass particles were obtained. The yield was 65%.

The conductivity of this solid electrolyte glass ceramics was 0.2×10⁻³S/cm.

### Production Example 6 [Production of composite material precursor]

5.00g of the sulfur-conductive aid composite obtained in Production Example 3, 5.00g of the solid electrolyte produced in Production Example 5 and 600g of alumina balls each having a diameter of 10 mm were put in a 500 ml-alumina-made container. The resultant was subjected to a mechanical milling treatment for 20 hours, whereby a composite of sulfur, the conductive aid and the solid electrolyte (composite material precursor) was obtained.

### Example 1

Hereinbelow, an explanation will be made on the examples of the composite positive electrode of the invention. The 0.2C discharge capacity, the 1C discharge capacity and the 2C discharge capacity of the lithium batteries produced in all of the Examples and the Comparative Examples were measured as follows:

### When the counter electrode is formed of In/Li alloy

As for the 0.2C discharge capacity, at a constant current discharge of 0.785 mA, a discharge capacity until a final voltage of 0.5V was measured. Similarly, as for the 1C discharge capacity, at a constant current discharge of 3.927 mA, a discharge capacity until a final voltage of 0.5V was measured. As for the 2C discharge capacity, at a constant current discharge of 7.854 mA, a discharge capacity until a final voltage of 0.5V was measured. The discharge capacity was measured by means of HJ1005SM8 manufactured by Hokuto Denko Corp.

### When the counter electrode is formed of Si + SE (or Si + SE + Li)

As for the 0.2C discharge capacity, a discharge capacity at a constant current discharge of 0.400 mA until a final voltage of 0.6V was measured. Similarly, as for the 1C discharge voltage, a discharge capacity at a constant current discharge of 2.0 mA until a final voltage of 0.6V was measured. As for the 2C discharge capacity, at a constant current discharge of 4.0 mA, a discharge capacity until a final voltage of 0.5V was measured. The discharge capacity was measured by means of HJ1005SM8 manufactured by Hokuto Denko Corp.

### [Production and evaluation of composite positive electrode material and battery]

7.00g of the composite material precursor prepared in Production Example 4 and 1.06g of Li foil (thickness: 0.1 mm, width and length: 3 mm each) (manufactured by Honjo Metal Co., Ltd.) were put in a 500 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope.

For this composite positive electrode material, the peak half width (2θ deg) of the hkl 220 of lithium sulfide was measured by the XRD diffraction measurement. The peak half width was found to be 1.591°.

The XRD measurement conditions were as follows. The XRD measurement was conducted under the same conditions also in the following examples and comparative examples.
Apparatus: Smartlab, manufactured by Rigaku Corporation
Tube voltage: 45kV
Tube current: 200mA
Slit: soller slit 5.0°
Scanning speed (20/0): 2°/min
Step width (2θ/θ): 0.02°
X-ray source: CuKα:λ=1.5418Å

A lithium battery was produced by using this composite positive electrode in the positive electrode layer, the solid electrolyte produced in Production Example 1 in the electrolyte layer and an In/Li alloy in the negative electrode layer, and the charge/discharge capacity was measured. The results are shown in Table 1.

### Example 2 [Production and evaluation of composite positive electrode material and battery]

0.850g of the composite material precursor prepared in Production Example 4 and 0.206g of Li foil (thickness: 0.1 mm, width and length: 3 mm each) (manufactured by Honjo Metal Co., Ltd.) were put in a 50 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 1.808°.

A lithium battery was produced by using this composite positive electrode in the positive electrode layer, the solid electrolyte produced in Production Example 1 in the electrolyte layer and a mix of silicon powder and the solid electrolyte produced in Production Example 1 in the negative electrode layer, and the charge/discharge capacity was measured. The results are shown in Table 1.

### Example 3 [Production and evaluation of composite positive electrode material and battery]

0.850g of the composite material precursor prepared in Production Example 4 and 0.348g of Li foil (thickness: 0.1 mm, width and length: 3 mm each) (manufactured by Honjo Metal Co., Ltd.) were put in a 50 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 1.826°.

A lithium battery was produced by using this composite positive electrode in the positive electrode layer, the solid electrolyte produced in Production Example 1 in the electrolyte layer, and a silicon powder and the solid electrolyte mix produced in Production Example 1 in the negative electrode layer, and the charge/discharge capacity was measured. The results are shown in Table 1.

### Example 4 [Production and evaluation of composite positive electrode material and battery]

0.850g of the composite material precursor prepared in Production Example 4 and 0.155g of Li foil (thickness: 0.1 mm, width and length: 3 mm each) (manufactured by Honjo Metal Co., Ltd.) were put in a 50 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 1.800°.

A lithium battery was produced by using this composite positive electrode in the positive electrode layer, the solid electrolyte produced in Production Example 1 in the electrolyte layer and a negative electrode mix obtained by attaching Li foil to a mix of silicon powder and the solid electrolyte produced in Production Example 1 in an amount ratio of 17 parts by weight of the Li foil relative to 100 parts by weight of silicon powder in the negative electrode layer, and the charge/discharge capacity was measured. The results are shown in Table 1.

### Example 5 [Production and evaluation of composite positive electrode material and battery]

0.850g of the composite material precursor prepared in Production Example 4 and 0.180g of Li foil (thickness: 0.1 mm, width and length: 3 mm each) (manufactured by Honjo Metal Co., Ltd.) were put in a 50 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 1.671°.

A lithium battery was produced by using this composite positive electrode in the positive electrode layer, the solid electrolyte produced in Production Example 1 in the electrolyte layer and a negative electrode mix obtained by attaching Li foil to a mix of silicon powder and the solid electrolyte produced in Production Example 1 in an amount ratio of 6 parts by weight of the Li foil relative to 100 parts by weight of the silicon powder in the negative electrode layer, and the charge/discharge capacity was measured. The results are shown in Table 1.

### Example 6 [Production and evaluation of the composite positive electrode material and battery]

8.684g of the composite material precursor prepared in Production Example 6 and 1.316g of Li foil (thickness: 0.1 mm, width and length: 3 mm each) (manufactured by Honjo Metal Co., Ltd.) were put in a 500 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 1.591°.

A lithium battery was produced by using this composite positive electrode in the positive electrode layer, the solid electrolyte produced in Production Example 1 in the electrolyte layer and a negative electrode mix obtained by attaching Li foil to a mix of silicon powder and the solid electrolyte produced in Production Example 1 in an amount ratio of 17 parts by weight of the Li foil relative to 100 parts by weight of the silicon powder in the negative electrode layer, and the charge/discharge capacity was measured. The results are shown in Table 1.

### Example 7 [Production and evaluation of composite positive electrode material and battery]

0.850g of the composite material precursor prepared in Production Example 6 and 0.129g of Li foil (thickness: 0.1 mm, width and length: 3 mm each) (manufactured by Honjo Metal Co., Ltd.) were put in a 50 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 1.939°.

A lithium battery was produced by using this composite positive electrode in the positive electrode layer, the solid electrolyte produced in Production Example 1 in the electrolyte layer and a negative electrode mix obtained by attaching Li foil to a mix of silicon powder and the solid electrolyte produced in Production Example 1 in an amount ratio of 17 parts by weight of the Li foil relative to 100 parts by weight of the silicon powder in the negative electrode layer, and the charge/discharge capacity was measured. The results are shown in Table 1.

### Example 8 [Production and evaluation of composite positive electrode material and battery]

1.700g of the composite material precursor prepared in Production Example 6 and 0.696g of Li foil (thickness: 0.1 mm, width and length: 3 mm each) (manufactured by Honjo Metal Co., Ltd.) were put in a 50 ml-alumina-made container, and stirred for 15 minutes by means of a dispensing spoon. Then, the container was covered and sealed. This sealed alumina container was subjected to a stirring treatment for 17 hours by means of a planetary ball mill apparatus containing no ceramic balls, whereby a composite positive electrode material of lithium sulfide, a conductive aid and a solid electrolyte was produced. Aggregating of lithium sulfide, a conductive aid and a solid electrolyte was confirmed by means of a scanning electron microscope. For this composite positive electrode material, the peak half width of the hkl 220 of lithium sulfide was measured by the XRD diffraction measurement. The peak half width was found to be 2.051°.

A lithium battery was produced by using this composite positive electrode in the positive electrode layer, the solid electrolyte produced in Production Example 1 in the electrolyte layer and a mix of silicon powder and the solid electrolyte produced in Production Example 1 in the negative electrode layer, and the charge/discharge capacity was measured. The results are shown in Table 1.

### Comparative Example 1 [Production and evaluation of composite positive electrode material and battery]

By using the method for aggregating lithium sulfide and a conductive aid disclosed in WO2012/102037, a composite positive electrode material of a lithium sulfide-carbon composite and a solid electrolyte was produced.

Specifically, 8.50g of the sulfur-conductive aid composite produced in Production Example 3 was added to 72 ml of THF. To the resultant, 240 ml of a 1.7M TEBHLi (lithium triethylborohydride) solution (120-05631, manufactured by Wako Pure Chemical Industries, Ltd.) that was obtained by using a THF solution as the solvent and had a volume molar concentration of 1.7 was added, heated to 65°C, and stirred for 8 hours.

After the stirring, the resultant was left stand for 24 hours. Then, the supernatant was removed, and THF was added to allow the unreacted TEBHLi to be dissolved in this THF, whereby the unreacted TEBHLi was removed. The removal operation with THF was conducted twice, and then the removal operation with hexane was repeated twice. Thereafter, vacuum drawing was conducted at room temperature to remove the solvent. Then, drying was conducted by vacuum heating at 150°C for 2 hours and by vacuum heating at 300°C for 2 hours, whereby the lithium sulfide-carbon composite was recovered.

0.65g of the lithium sulfide-carbon composite produced above and 0.50g of the solid electrolyte produced in Production Example 2 were mixed in a planetary ball mill containing ceramic balls for 5 hours, whereby a composite positive electrode material of lithium sulfide carbon and the solid electrolyte was prepared.

A lithium battery was produced by using this composite positive electrode in the positive electrode layer, the solid electrolyte glass ceramic particles produced in Production Example 1 in the electrolyte layer and an In/Li alloy in the negative electrode and the charge/discharge capacity was measured. The results are shown in Table 1.

### Comparative Example 2 [Production and evaluation of composite positive electrode material and battery]

A composite positive electrode material was produced in accordance with the method for aggregating lithium sulfide and a conductive aid described in WO2012/102037, whereby a composite positive electrode material of a lithium sulfide-carbon composite and a solid electrolyte was prepared.

Specifically, 8.50g of the sulfur-conductive aid composite prepared in Production Example 3 was added to 72 ml of THF. To the resultant, 240 ml of a 1.7M TEBHLi solution (120-05631, manufactured by Wako Pure Chemical Industries, Ltd.) that was obtained by using a THF solution as the solvent and had a volume molar concentration of 1.7 was added, heated to 65°C, and stirred for 8 hours.

After the 8-hour stirring, the resultant was left stand for 24 hours. Then, the supernatant was removed, and THF was added to allow the unreacted TEBHLi to be dissolved in this THF, whereby the unreacted TEBHLi was removed. The removal operation with THF was conducted twice, and then the removal operation with hexane was repeated twice. Thereafter, vacuum drawing was conducted at room temperature to remove the solvent. Then, drying was conducted by vacuum heating at 150°C for 2 hours and by vacuum heating at 300°C for 2 hours, whereby the lithium sulfide-carbon composite was recovered.

0.65g of the lithium sulfide-carbon composite produced above and 0.50g of the solid electrolyte produced in Production Example 5 were mixed in a planetary ball mill containing ceramic balls for 5 hours, whereby a composite positive electrode of lithium sulfide carbon and the solid electrolyte was prepared.

For this composite positive electrode material, the peak half width of the hkl 220 of lithium sulfide was measured by the XRD diffraction measurement. The peak half width was found to be 0.645°.

A lithium battery was produced by using this mixed positive electrode in the positive electrode layer, the solid electrolyte glass ceramic particles produced in Production Example 1 in the electrolyte layer and a mix of silicon powder and the solid electrolyte produced in Production Example 1 in the negative electrode and the charge/discharge capacity was measured. The results are shown in Table 1.

**Table 1**

| | Positive electrode | | | Counter electrode | | Charge/discharge capacity per weight of sulfur (Ah/g(S)) | | | |
|---|---|---|---|---|---|---|---|---|---|
| | XRD half peak width (°) | Li doping amount (Li:S) | Solid electrolyte | Type | Part by weight of Li relative to 100 parts by weight of Si | Initial charge capacity | 0.2C discharge capacity | 1C discharge capacity | 2C discharge capacity |
| Example 1 | 1.591 | 2:1 | Production Ex. 2 | In/Li alloy | - | 1.629 | 1.239 | 0.837 | 0.450 |
| Example 2 | 1.808 | 3.2:1 | Production Ex. 2 | Si+SE | 0 | 2.504 | 1.593 | 1.326 | 1.020 |
| Example 3 | 1.826 | 5.4:1 | Production Ex. 2 | Si+SE | 0 | 3.329 | 1.379 | 1.236 | 1.082 |
| Example 4 | 1.800 | 2.4:1 | Production Ex. 2 | Si+SE+Li | 17 | 1.717 | 1.303 | 1.031 | 0.810 |
| Example 5 | 1.671 | 2.8:1 | Production Ex. 2 | Si+SE+Li | 6 | 2.238 | 1.455 | 1.277 | 0.998 |
| Example 6 | 1.591 | 2:1 | Production Ex. 5 | Si+SE+Li | 17 | 1.642 | 1.473 | 1.170 | 0.905 |
| Example 7 | 1.939 | 2:1 | Production Ex. 5 | Si+SE+Li | 17 | 1.471 | 1.430 | 1.189 | 0.922 |
| Example 8 | 2.051 | 5.4:1 | Production Ex. 5 | Si+SE | 0 | 2.739 | 1.017 | 0.774 | 0.640 |
| Comp. Ex. 1 | - | 2:1 | Production Ex. 2 | In/Li alloy | - | 1.349 | 0.943 | 0.723 | 0.386 |
| Comp. Ex. 2 | 0.645 | 2:1 | Production Ex. 5 | Si+SE | 0 | 1.552 | 0.933 | 0.623 | 0.305 |

### Industrial Applicability

The composite material of the invention can be used in the positive electrode of a lithium ion battery.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The Japanese application specification claiming priority under the Paris Convention are incorporated herein by reference in its entirety.

## Claims

1. A composite material comprising an alkali metal sulfide, a conductive aid having fine pores and a solid electrolyte, wherein the alkali metal sulfide, the conductive aid and the solid electrolyte are aggregated and the half width of a peak of the alkali metal sulfide measured by X-ray diffraction is 1.0° or more.

2. The composite material according to claim 1, wherein at least part of the alkali metal sulfide is dispersed within the fine pores of the conductive aid.

3. The composite material according to claim 1 or 2, wherein the alkali metal sulfide is lithium sulfide.

4. The composite material according to any one of claims 1 to 3, wherein the conductive aid is a carbon material.

5. The composite material according to any one of claims 1 to 4, wherein the conductive aid is activated carbon.

6. The composite material according to any one of claims 1 to 5, wherein the solid electrolyte is a sulfide-based solid electrolyte.

7. The composite material according to any one of claims 1 to 6, wherein the solid electrolyte is a sulfide-based solid electrolyte comprising Li, P and S.

8. The composite material according to any one of claims 1 to 7, wherein the solid electrolyte is a sulfide-based solid electrolyte comprising Li, P, S and I, a sulfide-based solid electrolyte comprising Li, P, S and Br or a sulfide-based solid electrolyte comprising Li, P, S and Cl.

9. The composite material according to any one of claims 1 to 8, wherein the solid electrolyte is obtained by using as raw materials at least Li₂S and P₂S₅ and the molar ratio of Li₂S and P₂S₅ used as the raw materials is Li₂S:P₂S₅=60:40 to 80:20.

10. An electrode that is obtained from the composite material according to any one of

11. A lithium ion battery comprising the electrode according to claim 10 as a positive electrode layer.

12. A method for producing a composite material comprising:
reacting with an alkali metal a composite material precursor that comprises sulfur, a conductive aid having fine pores and a solid electrolyte in which the sulfur, the conductive aid and the solid electrolyte are aggregated, and at least part of the sulfur is present within fine pores of the conductive aid.

13. The method for producing the composite material according to claim 12 that comprises the following steps (A) and (B):
(A) a step of aggregating a sulfur-conductive aid composite that contains sulfur and a conductive aid having fine pores, in which the sulfur and the conductive aid are aggregated, and at least part of the sulfur is present within fine pores of the conductive aid, thereby to produce a composite material precursor; and
(B) a step of reacting the composite material precursor with an alkali metal.

14. The method for producing the composite material according to claim 12 or 13 that comprises the following steps (A-1), (A-2) and (B):
(A-1) a step of aggregating sulfur and a conductive aid having fine pores to produce a sulfur-conductive aid composite;
(A-2) a step of aggregating the sulfur-conductive aid composite with a solid electrolyte, thereby to produce a composite material precursor; and
(B) a step of reacting the composite material precursor with an alkali metal.

15. The method for producing the composite material according to any one of claims 12 to 14, wherein the alkali metal is a lithium metal.

16. The method for producing a composite material according to any one of claims 12 to 15, wherein the conductive aid is a carbon material.

17. The method for producing a composite material according to any one of claims 12 to 16, wherein the conductive aid is activated carbon.

18. The method for producing a composite material according to any one of claims 12 to 17, wherein the solid electrolyte is a sulfide-based solid electrolyte.

19. The method for producing a composite material according to any one of claims 12 to 18, wherein the solid electrolyte is a sulfide-based solid electrolyte comprising Li, P and S.

20. The method for producing a composite material according to any one of claims 12 to 19, wherein the solid electrolyte is obtained by using at least Li₂S and P₂S₅ as raw materials, and the molar ratio of Li₂S and P₂S₅ is Li₂S:P₂S₅=60:40 to 80:20.

21. The method for producing a composite material according to any one of claims 12 to 20, wherein the composite material precursor and the alkali metal are reacted by simply mixing only the composite material precursor and the alkali metal.

22. The method for producing a composite material according to any one of claims 12 to 21, wherein the composite material precursor and the alkali metal are reacted by mixing in a planetary ball mill containing no balls.
